# EUROPEAN PATENT APPLICATION

(11) **EP 4 693 069 A1**
(43) Date of publication of application: **11.02.2026**
(21) Application number: 24193547.7
(22) Date of filing: 08.08.2024
(51) Int. Cl.: G06F 16/35, G06N 3/0455, G06N 3/0464

(54) **COMPUTER-IMPLEMENTED METHOD**

(71) Applicant: Regulatory Genome Development Limited, Cambridge CB1 1AH (GB)
(72) Inventor: ASHTON-LELLIOTT, Maximillian Alexander, Cambridge, CB1 1AH (GB)
(74) Representative: Appleyard Lees IP LLP

(57) **Abstract**

The present invention relates to a computer-implemented method of determining a relevance of an input file to a predefined topic. The computer-implemented method comprises: receiving (S100) an input file; dividing (S102) the input file into a plurality of sections; inputting (S104) each section of the plurality of sections into at least one transformer model to generate at least one embedding for each section; constructing (S106) a graph using the at least one embedding for each section; inputting (S108) the graph to a graph convolutional network, GCN, to generate a relevance of the input file to a predefined topic; and outputting (S110) the relevance. Also provided is a method of training a machine learning model including the first and second transformers, and the GCN.

## Description

### FIELD

The subject-matter of the present disclosure relates to computer-implemented methods of determining a relevance of an input file to a predefined topic, and computer-implemented methods of training a machine learning model to determine a relevance of an input file to a predefined topic.

### BACKGROUND

Determining a relevance of an input file to a predefined topic is difficult when the input file does not have a predefined format, or where inputs files are of variable lengths.

An industry standard approach to generating a relevance score for documents of different lengths involves relying on a series of subdocument level predictions and a few heuristic rules to assign a simple 0 or 1 for whether the document was actionably relevant for a topic. This obviously has limitations due to the fact you are running several predictions on individual sections of text and treating them all separately then aggregating these predictions. Additionally, the result being a 0 or 1 label is not particularly useful as it does not allow for the ranking and comparison of documents.

The industry standard approach here would likely be one of two things:
1) an extension of the previously described method, continuing to fine-tune an existing model to perform subdocument predictions and then aggregate these up either through a mathematically transformation e.g. averaging, taking the maximum, etc. or making an additional model to go on top.
2) attempting to fit as much of the document as possible within the longest context window available that with a specialised transformer model or a long context large language model (LLM).

The first approach struggles with the issue of standardisation. Averaging over a long document will result in virtually meaningless embeddings, a short document will result in a lot of extremes so only a document of an average length is likely to have both the signal required for useful classification but also the standardisation to not be influenced by extremes. On the model end of things, there is a different problem which is any model trained to take in page by page embeddings has to know how many to expect as inputs to models always have to be standardised. So, a limit can be set, say the maximum number of pages to be embedded is 500 and discard all documents longer than that. However, the inputs must then be padded quite substantially as even a 20 page document now has to have 500 pages worth of inputs. This is a very common practise in machine learning with transformer models usually always requiring 512 tokens input. However, these models succeed with padding due to their vast amounts of training data, training a custom aggregation model from scratch with this amount of padding on only a few thousand training examples would be extremely difficult. The second approach is slightly more viable. The troubles here are more of a practical nature. Firstly, there is again the problem of limitation, even the longest context models available still couldn't deal with the length of some of these documents so again there may be a need for a size limit. In addition to this, however, there is the expense. These models are vastly larger and vastly more inefficient, meaning both training and using this most in production would be prohibitively expensive.

It is an aim of the present invention to address such problems and improve on the prior art.

### SUMMARY

According to an aspect of the present disclosure, there is provided a computer-implemented method of determining a relevance of an input file to a predefined topic. The computer-implemented method comprises: receiving an input file; dividing the input file into a plurality of sections; inputting each section of the plurality of sections into at least one transformer model to generate at least one embedding for each section; constructing a graph using the at least one embedding for each section; inputting the graph to a graph convolutional network, GCN, to generate a relevance of the input file to a predefined topic; and outputting the relevance.

Using the at least one embedding to create a graph used as an input to the GCN means that the input file can be of variable length, rather than a standard length.

In an embodiment, inputting each section of the plurality of sections into at least one transformer model to generate at least one embedding for each section comprises: inputting each section to a first transformer model to generate a first embedding for each section; and inputting each section to a second transformer model to generate a second embedding for each section.

In an embodiment, the first transformer model has been pre-trained and the second transformer model has been trained end-to-end with the GCN.

In an embodiment, constructing the graph comprises: forming, for each section, a node of the graph using the first embedding and the second embedding; and forming edges of the graph using an edge index.

In an embodiment, forming, for each section, a node of the graph using the first embedding and the second embedding comprises: concatenating the first embedding and the second embedding.

In an embodiment, the edge index prescribes each node, nₙ, is connected to a previous node, nₙ₋₁, and a following node, nₙ₊₁, except for a first node n₁, which connects only to a second node, n₂, and except for a final node n_{f}, which connects only to penultimate node n_{f-1}.

In an embodiment, the GCN comprises: a Graph Attention Network version two, GATv2Conv, layer; a plurality of Sage Convolutional, SageConv, layers; an attention pooling layer; and a fully connected layer.

In an embodiment, the input file is a text document.

In an embodiment, the text document is a regulatory document, and wherein the predefined topic is a regulatory topic, wherein optionally the regulatory topic is selected from a list of regulatory topics include: Anti-Money Laundering, Cyber Security, Data Protection, Capital Markets, Market Abuse, Securities Markets Infrastructure, Crypto Currency, ESG Risks, Corporate Governance, Collective Investment Schemes, Digital Financial Services, and Payments Infrastructure.

According to an aspect of the present disclosure, there is provided a computer-implemented method of training a machine learning model to determining a relevance of an input file to a predefined topic, the computer-implemented method comprising: providing at least one transformer model, a graph convolutional network, GCN, and training data, the training data including input files and corresponding labels denoting their relevance to the predefined topic; dividing each input file into a plurality of sections; inputting sections for the input files to the at least one transformer model to generate at least one embedding; constructing a graph using the at least one embedding as a node for each section; inputting the graph to a graph convolutional network, GCN, to generate a relevance of each input file to a predefined topic; calculating a loss using the relevance of each input file; and updating parameters of the at least one transformer model and the GCN to minimise the loss.

In an embodiment, inputting the sections to the at least one transformer model to generate at least one embedding, comprises: inputting the sections to a first transformer model to generate a first embedding for each section; inputting the sections to a second transformer model to generate a second embedding for each section, wherein updating parameters of the at least one transformer model to minimise the loss comprises updating parameters of the first transformer model to minimise the loss, not updating parameters of the second transformer model.

In an embodiment, the GCN comprises: a Graph Attention Network version two, GATv2Conv, layer; a plurality of Sage Convolutional, SageConv, layers; an attention pooling layer; and a fully connected layer.

In an embodiment, input file is a text document, and optionally wherein each section is a page of the text document.

In an embodiment, the text document is a regulatory document, and wherein the predefined topic is a regulatory topic, wherein optionally the regulatory topic is selected from a list of regulatory topics include: Anti-Money Laundering, Cyber Security, Data Protection, Capital Markets, Market Abuse, Securities Markets Infrastructure, Crypto Currency, ESG Risks, Corporate Governance, Collective Investment Schemes, Digital Financial Services, and Payments Infrastructure.

According to an aspect of the present disclosure, there is provided a transitory, or non-transitory, computer-readable medium, having instructions stored thereon that when executed by at least one processor, cause the at least one processor to perform the computer-implemented method of any preceding aspect or embodiment.

According to an aspect of the present disclosure, there is provided a computer-implemented method of generating an input for a graph convolutional network trained to perform an inference task, the computer-implemented method comprising: receiving an input file; dividing the input file into a plurality of sections; inputting each section into a first transformer model to generate a first embedding; inputting each section into a second transformer model to generate a second embedding; and generating a graph having a plurality of nodes and edges, wherein each node corresponds to different section of the plurality of sections.

According to an aspect of the present disclosure, there is provided a computer-implemented method of performing an inference task using a graph convolutional network, the computer-implemented method comprising: generating an input for a graph convolutional network of the preceding aspect; inputting the graph to the graph convolutional network; and outputting an inference result from the graph convolutional network.

In an embodiment, the input file is a text document.

In an embodiment, the inference task is a relevance to a predefined topic. The use of a GCN to classify long text documents is unique. People have used GCNs to classify text previously. However, GCNs are usually used to embed words and scaling that up to a paragraph, or embedding full pieces of text (i.e. documents) linking them together and then framing it as a node classification problem rather than a graph classification one.

Another unique feature is in the context of learning to embed nodes of a graph. The idea of connecting an embedding model to a GCN and allowing it to train with the GCN end-to-end is unique. The general framing of a document as a sequence of pages connected together in the graph is from what I can tell unique.

### BRIEF DESCRIPTION OF DRAWINGS

The subject-matter of the present disclosure is best described with reference to the accompanying figures, in which:
Figure 1 shows a block diagram of a computer used for implementing the various methods according to embodiments;
Figure 2 shows a flow chart describing a method of determining a relevance of an input file to a predefined topic, according to embodiments;
Figure 3 shows a block diagram of a graph convolutional network, GCN, used as part of the method of Figure 2, according to embodiments;
Figure 4 shows a flow chart summarising a method of determining a relevance of an input file to a predefined topic, according to embodiments; and
Figure 5 shows a flow chart summarising a method of training a machine learning model to determine a relevance of an input file to a predefine topic, according to embodiments.

### DESCRIPTION OF EMBODIMENTS

Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

The embodiments described herein may be embodied as sets of instructions stored as electronic data in one or more storage media. Specifically, the instructions may be provided on a transitory or non-transitory computer-readable media. When executed by the processor, the processor is configured to perform the various methods described in the following embodiments. In this way, the methods may be computer-implemented methods.

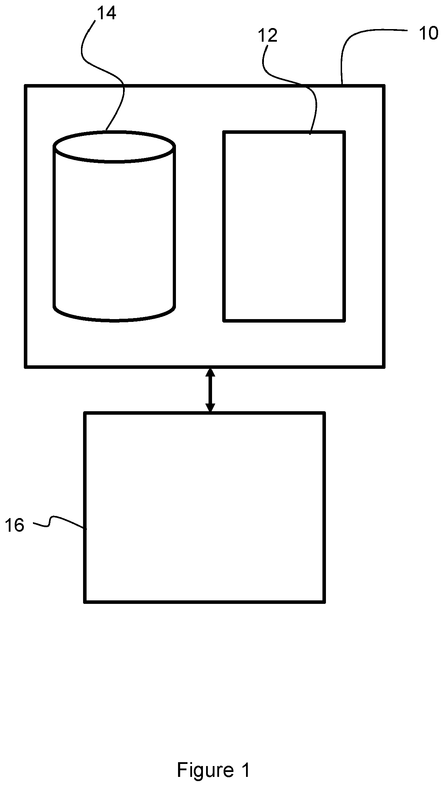

With reference to Figure 1, the methods may be implemented on a computer 10, having storage 12 for storing the electronic data forming the instructions, and at least one processor 14. A user interface 16 is also provided for a user to interface with the computer. The user interface 16 includes an input for receiving a user input. The user interface 16 includes a display for displaying information to the user. The display me be integral with the user interface or may be a different part.

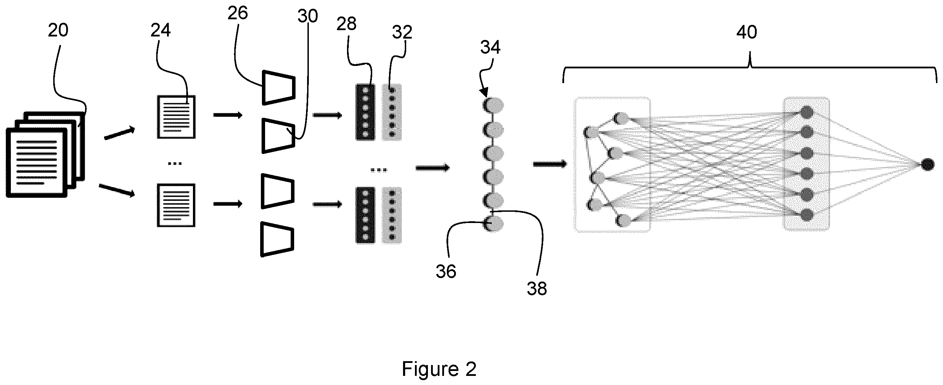

With reference to Figure 2, a method of determining a relevance of an input file to a predefined topic includes, initially receiving an input file 20. The input file 20 may be a text file. For example, the text file may be a text document. The text document may be of any length and format. In other words, the input file may be of varying lengths.

The text document may be a regulatory document. The predefined topic may be a regulatory topic. For example, the regulatory topic may be Anti-Money Laundering, AML. Other examples include: Cyber Security, Data Protection, Capital Markets, Market Abuse, Securities Markets Infrastructure, Crypto Currency, ESG Risks, Corporate Governance, Collective Investment Schemes, Digital Financial Services, and Payments Infrastructure

The method initially includes dividing the input file into a plurality of sections 24. The plurality of sections may be a predefined length. For example, when the input file is a text document, the predefined length may be a page. In other words, a section may be a page.

The method comprises inputting each section of the plurality of sections into at least one transformer model to generate at least one embedding for each section. This may include inputting each section 24 to a first transformer model 26. The first transformer modal may generate a first embedding 28. Similarly, each section 24 may be input to a second transformer model 30 to generate a second embedding 32. The first and second transformer models 26, 30, may be neural networks trained to generate embeddings from sections of documents.

The first and second transformer models 26, 30, may be bert-tiny models.

The first and second embeddings 28, 32, may be latent space embeddings.

The method also comprises constructing a graph 34 using the embeddings. The graph includes a plurality of nodes 36, and edges 38 connecting various ones of the plurality of nodes. In this embodiment, the graph my be a one-dimensional graph. In other words, the graph may be a single line graph.

Each node may represent a different section. The first and second embeddings for a section are used to form the node for that section. More specifically, the first and second embeddings for a section are concatenated. The concatenated embeddings form the node for that section.

The edges may be formed using an edge index. The edge index defines how the nodes should be connected. The edge index prescribes that each node, nₙ, is connected to a previous node, nₙ₋₁, and a following node, nₙ₊₁, except for a first node n₁, which connects only to a second node, n₂, and except for a final node, n_{f}, which connects only to a penultimate node n_{f-1}.

The graph 34 is input to a graph convolutional network 40, GCN. The GCN 40 generates a relevance of the input file to a predefined topic, e.g. AML. The relevance may be a relevance score. The relevance score may be a probability. The probability may be between 0 and 1, where 0 is zero probability that the input file is relevant to the predefined topic, and 1 is a 100% certainty that the input file is relevance to the predefined topic.

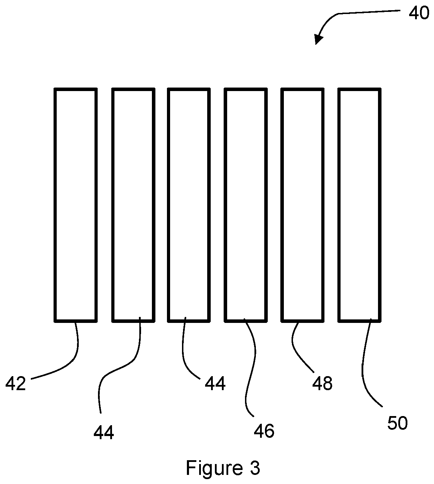

With reference to Figure 3, the GCN 40, includes Graph Attention Network (GAT) convolutional layer 42, two Sage convolutional layers 44, an attention pooling layer 46, and a final, fully connected layer 48. An output layer 50 is also provided which outputs the relevance score. The GAT convolutional layer 42 may be a GAT version two convolutional GATv2conv layer.

The GAT convolutional layer 42 may be a modified version of a GAT. In particular, the GAT convolutional layer 42 may be a GATv2, in other words version two of a GAT. The GATv2 differs from a conventional GAT by modifying an order of operations to form a dynamic graph attention variant that is strictly more expressive than GAT. GATv2 is available as part of PyTorch Geometric library as GATv2conv, the Deep Graph Library as GATv2Conv, and the TensorFlow GNN library as GATv2Convolution.

The Sage convolutional layers 44 are available as part of the PyTorch Geometric library as conv.SAGEconv which is described there as a GraphSAGE operator. The Sage convolutional layers 44 are available in the Deep Graph Library as SAGEconv.

The attention pooling layer is effectively a gated graph neural network. The gated graph neural network pools information from the graph network together. The gated graph neural network is a modification of a graph neural network (GNN) to be suitable for non-sequential outputs. The biggest modification to GNNs is to use Gated Recurrent Units an unroll the recurrence for a fixed number of steps T and use backpropagation through time in order to compute gradients.

With further reference to Figure 2, the output layer 50, or node, may output the relevance. The relevance may be output to the user interface.

GCNs 40 have a useful property which is that they do not require any sort of predefined input size. The only thing that needs to be maintained is the number of dimensions per node and edge. Therefore, the problem discussed herein may be treated as a graph classification problem, treating every document as a series of nodes (pages) being connected linearly in sequence.

GCNs can be used in various ways. The inventors first tried an approach where the GCN was pre-trained on a separate classification task (a binary decision on whether the page was from a relevance document or not). Then, once the model was trained, the weights would be frozen and then a penultimate embedding result (the embeddings that go into the linear classification layer) would be taken and those would be the embeddings for the page of text. These embeddings then became the features for that page's node in the graph. Once the graph was fully constructed it would go into the custom GCN described above. This allowed the GCN to capture both the specific nodes which were important to focus on via the attention mechanism in the GAT layers but also focus on the global structure of the graph via the aggregation features of the SageConv layers.

This approach yielded good results and vastly improved on the accuracy and generalisability of the method when compared to the initial model and heuristic approach. It is also a much faster and more efficient approach than the second of the industry standard methods. To compare the parameter sizes of these approaches a selection of comparative models are included which one could have used instead of this approach. Comparative models are:

The foregoing described method: 4,528,000 parameters during training. During inference there may be twice as many parameters due to there being first and second transformer (Bert-Tiny) models.

BERT Base: 110,000,000 parameters (24x larger, 512 context ~1-2 pages of a document).

Longformer: 149,000,000 parameters (33x larger, 4096 context ~ 8-10 pages).

PaLM / Llama: 7,000,000,000 params (1546x larger, 4096 (potentially more with RoPE)).

However, while this method was a vast improvement over the old, there was more that could be done with this approach. The main limitation here was that the embeddings from the pre-trained model while useful were still on an individual level the embeddings were for the purpose of making individual predictions and as such could be quite extreme/skewed. As such, a second embedding model was introduced which would not be fine-tuned before the training of the GCN but would actually be attached to the model in such a way that the gradients would flow through the GCN during training creating an end-to-end training process.

With continued reference to Figure 2, embodiments provide a computer-implemented method of training a machine learning model to determine a relevance of an input file to a predefined topic. The machine learning model may be considered as including the first and second transformer models 26, 30, the edge index for constructing the graph, and the GCN 40 which includes the GAT convolutional layer 42, the two Sage convolutional layers 44, the attention pooling layers 46, the final, fully connected layer 48, and the output layer 50.

The method requires providing training data. The training data includes input files and corresponding labels denoting their relevance to the predefined topic. For example, where the predefined topic is AML, the labels include a relevance score between 1 and 0, associated with the input file. The relevance score has been described previously.

The training method also includes dividing each input file into a plurality of sections. Where the input file is a text document, the sections may be pages. In other words, each section corresponds to a different page of the text document.

The sections of the input files are input to at least one transformer model to generate an embedding. As described previously, there are specifically two transformer models in this embodiment, each generating a separate embedding. In other words, there is a first transformer model for generating a first embedding and a second transformer model for generating a second embedding.

More specifically, as described previously, the first and second embedding models may be bert-tiny models. The second embedding model may be fine-tuned as described previously on the page by page classification task. Then the second transformer model may have its parameters, e.g. weights, frozen. Therefore, inputting the sections will involve inputting each section to the second transformer model having frozen weights, and inputting each section to the first transformer model which has unfrozen weights.

The performance of the second transformer model in this initialisation phase isn't too important as what is important is it segments the embedding space into "relevant" to a theme and "not relevant". The reason is that it is desirable to have one model which embeds each page as if it is an isolated data point (the second transformer model). While the other model (the first transformer model) is free to learn the optimal embeddings for a page in the context of the graph, essentially it is learning what embeddings the GCN as a whole finds most useful.

This is beneficial when considering overconfidence within models. Models are trained to be highly certain of their outcomes, which results in a highly segmented embedding space. Consequently, the first transformer model is likely to produce extreme predictions for each page. However, it is not desirable to have the model embedding pages within the context of the entire document due to the transformer models' context limit. Hence, the inventors devised a solution that maintains the context on the page itself. The loss values and gradient updates will come from the graph. This approach will make the updates less extreme as they are distributed across all pages of the document, making the page embeddings less extreme and more indicative of the content.

The method also comprises constructing a graph using the embeddings as a node for each section. In other words, the first and second embeddings for a first page form a first node. The first and second embeddings for a second page form a second node. In other words, each node corresponds to a page.

The method comprises inputting the graph to the GCN to generate a relevance for each input file to a predefined topic, e.g. AML. The final fully connected layer of the GCN may produce an embedding vector having a predefined size. The predefined size may be 256 bits. In other words, the final fully connected layer may produce a 256-bit embedding vector.

The embedding vector is input to the output layer, which is a linear layer, to give a singular relevance prediction. In other words, the singular relevance prediction is a single score, which may be between 0 and 1, as described previously.

A loss is calculated using the relevance of each input file and the label for that input file. The loss may be calculated over all input files and labels. For example, the loss may be calculated using means squared error (MSE).

The method comprises updating parameters of the at least one transformer model and the GCN to minimise the loss. More specifically, the parameters of the first transformer may be updated to minimise the loss. The parameters of the second transformer are not updated, and instead remain frozen during training. Therefore, it is only the parameters of the first transformer model that are updated to minimise the loss.

The parameters being updated may be the weights of the first transformer model and the GCN, respectively. The updates may be performed using backpropagation and an optimisation algorithm such as gradient descent.

The methods described previously, relate to determining a relevance of a text document. The input files may instead be other modalities. For example, the input file may be an image. Here, the image may be divided into sections where the sections are equal sized squares or rectangles. The transformer models may be image to embedding transformers. Then, the method proceeds as described previously, namely constructing the graph from the embeddings and then inputting the graph to the GCM 40.

Furthermore, the methods may be broken up into a more granular level. For instance, embodiments may also relate to a computer-implemented method of generating an input for the GCN 40 from an input file, where the input file is of variable, or non-consistent, length and format. The method comprises receiving an input file, dividing the input file into a plurality of sections, inputting each section of the plurality of sections into at least one transformer model to generate at least one embedding for each section; and constructing a graph using the at least one embedding for each section.

As above, the additional features may be applied to this method. For example, there may be first and second transformer models generating first and second embedding, respectively.

There may also be a computer-implemented method of performing an inference task using the GCN. For example, this method may comprise: generating an input to the GCN using the method described above; inputting the graph to the GCN; and outputting a result of the inference task from the GCN. The inference task may of course be determining a relevance of an input file to a predefined topic such as AML.

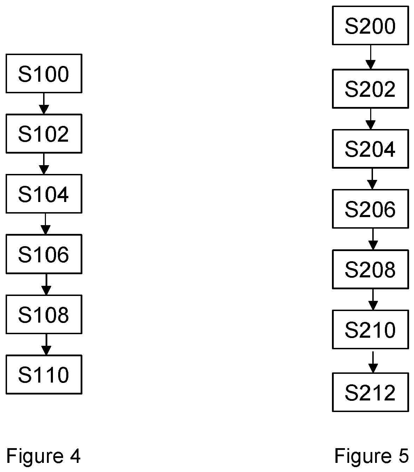

With reference to Figure 4, the method of determining a relevance of an input file to a predefined topic may be summarised as including: receiving S100 an input file; dividing S102 the input file into a plurality of sections; inputting S104 each section of the plurality of sections into at least one transformer model to generate at least one embedding for each section; constructing S106 a graph using the at least one embedding for each section; inputting S108 the graph to a graph convolutional network, GCN, to generate a relevance of the input file to a predefined topic; and outputting S110 the relevance.

With reference to Figure 5, the method of training a machine learning model to determining a relevance of an input file to a predefined topic may be summarised as including: providing S200 at least one transformer model, a graph convolutional network, GCN, and training data, the training data including input files and corresponding labels denoting their relevance to the predefined topic; dividing S202 each input file into a plurality of sections; inputting S204 sections for the input files to the at least one transformer model to generate at least one embedding; constructing S206 a graph using the at least one embedding as a node for each section; inputting S208 the graph to a graph convolutional network, GCN, to generate a relevance of each input file to a predefined topic; calculating S210 a loss using the relevance of each input file; and updating S212 parameters of the at least one transformer model and the GCN to minimise the loss.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A computer-implemented method of determining a relevance of an input file to a predefined topic, the computer-implemented method comprising:
receiving an input file;
dividing the input file into a plurality of sections;
inputting each section of the plurality of sections into at least one transformer model to generate at least one embedding for each section;
constructing a graph using the at least one embedding for each section;
inputting the graph to a graph convolutional network, GCN, to generate a relevance of the input file to a predefined topic; and
outputting the relevance.

2. The computer-implemented method of Claim 1, wherein inputting each section of the plurality of sections into at least one transformer model to generate at least one embedding for each section comprises:
inputting each section to a first transformer model to generate a first embedding for each section; and
inputting each section to a second transformer model to generate a second embedding for each section.

3. The computer-implemented method of Claim 2, wherein the first transformer model has been pre-trained and the second transformer model has been trained end-to-end with the GCN.

4. The computer-implemented method of Claim 2 or Claim 3, wherein constructing the graph comprises:
forming, for each section, a node of the graph using the first embedding and the second embedding; and
forming edges of the graph using an edge index.

5. The computer-implemented method of Claim 4, wherein forming, for each section, a node of the graph using the first embedding and the second embedding comprises:
concatenating the first embedding and the second embedding.

6. The computer-implemented method of Claim 4 or Claim 5, wherein the edge index prescribes each node, nₙ, is connected to a previous node, nₙ₋₁, and a following node, nₙ₊₁, except for a first node n₁, which connects only to a second node, n₂, and except for a final node n_{f}, which connects only to penultimate node n_{f-1}.

7. The computer-implemented method of any preceding claim, wherein the GCN comprises:
a Graph Attention Network version two, GATv2Conv, layer;
a plurality of Sage Convolutional, SageConv, layers;
an attention pooling layer; and
a fully connected layer.

8. The computer-implemented method of any preceding claim, wherein the input file is a text document.

9. The computer-implemented method of Claim 8, wherein the text document is a regulatory document, and wherein the predefined topic is a regulatory topic, wherein optionally the regulatory topic is selected from a list of regulatory topics include: Anti-Money Laundering, Cyber Security, Data Protection, Capital Markets, Market Abuse, Securities Markets Infrastructure, Crypto Currency, ESG Risks, Corporate Governance, Collective Investment Schemes, Digital Financial Services, and Payments Infrastructure.

10. A computer-implemented method of training a machine learning model to determining a relevance of an input file to a predefined topic, the computer-implemented method comprising:
providing at least one transformer model, a graph convolutional network, GCN, and training data, the training data including input files and corresponding labels denoting their relevance to the predefined topic;
dividing each input file into a plurality of sections;
inputting sections for the input files to the at least one transformer model to generate at least one embedding;
constructing a graph using the at least one embedding as a node for each section;
inputting the graph to a graph convolutional network, GCN, to generate a relevance of each input file to a predefined topic;
calculating a loss using the relevance of each input file; and
updating parameters of the at least one transformer model and the GCN to minimise the loss.

11. The computer-implemented method of Claim 10, wherein inputting the sections to the at least one transformer model to generate at least one embedding, comprises:
inputting the sections to a first transformer model to generate a first embedding for each section;
inputting the sections to a second transformer model to generate a second embedding for each section,
wherein updating parameters of the at least one transformer model to minimise the loss comprises updating parameters of the first transformer model to minimise the loss, not updating parameters of the second transformer model.

12. The computer-implemented method of Claim 10 or Claim 11, wherein the GCN comprises:
a Graph Attention Network version two, GATv2Conv, layer;
a plurality of Sage Convolutional, SageConv, layers;
an attention pooling layer; and
a fully connected layer.

13. The computer-implemented method of any preceding claim, wherein the input file is a text document, and optionally wherein each section is a page of the text document.

14. The computer-implemented method of Claim 8, wherein the text document is a regulatory document, and wherein the predefined topic is a regulatory topic, wherein optionally the regulatory topic is selected from a list of regulatory topics include: Anti-Money Laundering, Cyber Security, Data Protection, Capital Markets, Market Abuse, Securities Markets Infrastructure, Crypto Currency, ESG Risks, Corporate Governance, Collective Investment Schemes, Digital Financial Services, and Payments Infrastructure.

15. A transitory, or non-transitory, computer-readable medium, having instructions stored thereon that when executed by at least one processor, cause the at least one processor to perform the computer-implemented method of any preceding claim.
